Europäisches Patentamt

European Patent Office

Office européen des brevets

(19)

(11) Publication number: **0 450 570 A2**

# EUROPEAN PATENT APPLICATION

(21) Application number: 91105188.6

(22) Date of filing: 02.04.91

(51) Int. Cl.⁵: **B32B 15/16**, B32B 7/04, E04C 2/26

(30) Priority: 02.04.90 FI 901638

(43) Date of publication of application:
09.10.91 Bulletin 91/41

(84) Designated Contracting States:
AT CH DE DK ES FR IT LI SE

(71) Applicant: OUTOKUMPU OY
Länsituulentie 7 A
SF-02100 Espoo(FI)

(72) Inventor: Pohjus, Juhani Kalevi
Apilakaari 14 B 7
SF-62900 Alajärvi(FI)
Inventor: Vahteristo, Ari Jukka Erik
Mäntytie 4
SF-28400 Ulvila(FI)

(74) Representative: Zipse + Habersack
Kemnatenstrasse 49
W-8000 München 19(DE)

(54) Method for manufacturing prefabricated copper-covered building elements and a prefabricated element produced according to the said method.

(57) The invention relates to the manufacture of a prefabricated sandwich-type building element, so that the facade side of the prefabricate is a copper plate, and the inner side is a plastic-coated steel plate. In between the plates, there is provided a material suited for both heat and fire insulation. The invention also relates to a product manufactured according to the method of the invention.

EP 0 450 570 A2

The present invention relates to the manufacture of a sandwich-type prefabricated building element, so that the facade side of the prefabricate is a copper plate, and the opposite side is a plastic-coated steel plate. In between the plates there is provided some material suited both for heat and fire insulation. The invention also relates to a product manufactured according to the method of the invention.

Copper has been used as facade material in the prior art, too, but in those cases the wall structure has first been constructed in traditional fashion, and copper cassettes have then been attached to the surface of the otherwise ready-made wall.

Plastic-coated steel has been used for manufacturing building prefabricates, in which case both the facade and the inner surface obtain the said steel plate, and the insulation material is located in between them. Each steel plate on its side is glued to the insulation material, but because the plates are plastic-coated, the question has mainly been that of glueing plastic onto the other material.

The use of plastic-coated steel plate is appropriate in many connections, but in cases where more elegant facade surfaces are desired, copper is more applicable as a material. So far the drawback with copper has been that it has been necessary to build the walls in traditional fashion, without making use of building panels compiled of prefabricates, because an advantageous method of attaching metal plate to the insulation material has not been found. As was mentioned above, while glueing steel plates to insulation material, the question has mainly been that of glueing plastic to the insulation material, and not of glueing metal to the insulation material. However, the advantages achieved by using prefabricates are obvious, for instance their rapid and easy erection and modifiability. In the prefabricates, the material placed in between the plates is first of all heat insulation material, but nowadays good fire insulation properties are also required. Such materials are for instance mineral wool and glass wool.

According to the present invention, we have now developed a method for manufacturing prefabricated building elements with copper as the facade material. As a result of the study and development work, it has now been proved that copper plate can be attached to an insulation material by glueing, and that the obtained result is a solid structure. The essential novel features of the invention are apparent from the appended patent claims.

When copper is used as the facade material of a prefabricate, there are first produced sandwich prefabricates where the external surface is formed of copper plate and the internal surface of plastic-coated steel plate, and a constructive insulation material is glued therebetween. The copper plate needed for each prefabricate can naturally be formed of several separate plates. When comparing this copper sandwich prefabricate to other elegant facade surfaces, it is found out that the prefabricate structure of the present invention is about 50 mm thinner than for instance a corresponding facade prefabricate covered with brick tiles. In practice this means that the inner area of the building is increased by about 2%, while the outer measures remain the same. This makes a remarkable difference, particularly in the case of public buildings, for example.

The building panel of the invention can be used both as wall and ceiling material.

## Claims

1. A method for manufacturing a prefabricated building element of the sandwich type, comprising two metal plates with a layer of some heat-insulating material with good fire-protection properties provided therebetween, **characterized** in that the facade side of the prefabricated element, formed of copper plates, is fastened to the insulation layer by means of glueing.

2. A prefabricated sandwich-type building element, comprising two metal plates with a layer of some heat-insulating material with good fire-protection properties provided therebetween, **characterized** in that the facade side of the prefabricate is made of copper.

3. The prefabricated building element of claim 2, **characterized** in that the facade side is formed of copper plates which are glued to the insulation layer.